# DEMANDE DE BREVET EUROPEEN

(11) **EP 0 645 860 A1**
(43) Date de publication de la demande: **29.03.1995**
(21) Numéro de dépôt: 94402103.9
(22) Date de dépôt: 21.09.1994
(51) Int. Cl.: H02G 1/08, G02B 6/44

(54) **Vanne pour la régénération du débit d'air d'entrainement d'un câble de télécommunications dans une conduite enterrée**

(30) Priorité: 27.09.1993 FR 9311461
(71) Demandeur: FRANCE TELECOM, F-75015 Paris (FR)
(72) Inventeur: Pecot, Alain, F-22300 Lannion (FR); Beaumanoir, Yvon, F-22300 Lannion (FR)
(74) Mandataire: Armengaud Ainé, Alain

(57) **Abrégé**

Vanne pour la régénération du débit d'air d'entraînement d'un câble de télécommunications (3) dans une conduite enterrée (1), au moyen d'un furet (6) fixé à l'extrémité du câble.

La vanne comporte un boîtier fixe (15) en deux parties, dans lequel est monté un boisseau comprenant deux opercules (24, 32) séparées par un diaphragme coulissant (41). Les deux opercules sont formées de deux demi-bagues (25, 26) d'une part, (33, 34) d'autre part, dont l'une comporte un conduit incliné (27, 35) faisant communiquer ou non une chambre d'admission et d'évacuation d'air comprimé avec un canal de passage axial (28).

La manoeuvre en séquence des parties mobiles du boisseau est réalisée par le furet d'entraînement du câble qui comporte deux protubérances (50, 54), de manière à exercer un effort de poussée sur le furet en amont puis en aval de la vanne, avant que les sections de la conduite reliées par celle-ci ne soient mises successivement à l'air libre après passage du furet.

## Description

La présente invention est relative à une vanne permettant de maintenir et en particulier de régénérer une pression d'air appropriée dans une section de conduite enterrée, pour réaliser le soufflage d'un câble, notamment du genre câble de télécommunications, à mettre en place dans cette section.

On connaît déjà dans la technique le procédé qui consiste à réaliser l'introduction et la mise en place d'un câble selon la longueur d'une conduite enterrée grâce à l'injection, à une extrémité de cette conduite, d'un flux d'air sous pression, le câble introduit par cette extrémité étant solidarisé d'un furet ou organe analogue, fixé en tête de ce câble et sur la face antérieure duquel s'exerce la pression de l'air. La force de poussée créée par cette pression sur le furet, dont le contour extérieur épouse sensiblement la section circulaire de la conduite pour ne laisser qu'un jeu de fuite réduit, se traduit dans ces conditions par un effort de traction sur le câble, la vitesse de déplacement du furet, donc de mise en place de ce câble dans la conduite, étant contrôlée par celle du déroulement d'un touret ou tambour de dévidement sur lequel ce câble est enroulé et dont il se déroule en étant au fur et à mesure introduit par l'extrémité ouverte de la conduite. Un compresseur, disposé également à proximité même de cette extrémité, délivre l'air sous pression nécessaire à la mise en oeuvre de cette opération.
A titre indicatif, une méthode opératoire reposant sur le procédé général brièvement rappelé ci-dessus, est décrite dans le brevet français 90 11 033 du 5 Septembre 1990 pour un "Procédé pour la pose en conduites de grandes longueurs d'un câble de télécommunications et dispositif pour la mise en oeuvre de ce procédé", au nom des demandeurs, qui illustre en particulier un mécanisme propre à permettre de maintenir de proche en proche, à l'intérieur de la conduite, une pression d'air satisfaisante. Toutefois ces dispositions, si elles se révèlent efficaces, présentent l'inconvénient de n'être pas véritablement adaptées lorque les tronçons ou sections successives de la conduite doivent présenter une longueur notable, qui peut, dans les réseaux actuels, en particulier utilisant des câbles à fibres optiques, atteindre et désormais dépasser 2 400 m pour chaque section séparément.

Or, l'augmentation des longueurs de pose des câbles reste un objectif de première importance afin de diminuer le nombre des épissures en ligne nécessaires, en augmentant la fiabilité de l'installation et en diminuant, toutes choses égales par ailleurs, son prix de revient.

Une technique spécifique décrite dans le brevet français 89 12770 du 29 Septembre 1989 pour "Procédé d'enroulement d'un câble ou analogue sur la surface externe d'un touret", également au nom des demandeurs, permet de doubler les longueurs de pose à partir d'un processus de montage particulier du câble sur son touret. Toutefois, le problème à résoudre reste encore le même, à savoir de maintenir de façon efficace et sans perte excessive vers l'extérieur la pression de l'air comprimé introduit dans chaque section, derrière le furet de traction.

Pour conserver cette pression indispensable sur une longueur plus élevée, le brevet 90 11033 déjà cité, prévoit de décomposer la longueur de pose souhaitée en plusieurs tronçons ou sections successives, de préférence identiques, correspondant à une longueur de câble d'un seul tenant sans épissures, chacune de ces sections présentant une longueur égale ou inférieure à la limite au-delà de laquelle la traction exercée par le furet n'est plus suffisante pour déplacer le câble, compte tenu du profil du trajet suivi par la conduite enterrée.

Dans une telle solution, le câble est mis en place par étapes, d'une section à la suivante, deux sections adjacentes quelconques étant isolées mutuellement par un moyen d'obturation, du genre d'une vanne à diaphragme mobile percé d'un orifice central de passage du câble, cette vanne étant associée à des moyens d'introduction de l'air comprimé de manière à régénérer le flux introduit dans la section située du côté aval de cette vanne, dans le sens de déplacement du câble, tandis que, en amont, la section précédente est mise à l'air libre. De cette manière, le câble est poussé dans la section considérée d'une extrémité à l'autre de celle-ci, avant que le furet en tête de ce câble ne franchisse la vanne située en aval, disposée au niveau de communication avec la section suivante et ainsi de suite jusqu'à l'extrémité de la conduite, avec autant de compresseurs et de vannes d'isolement que de sections adjacentes successives. La longueur totale du câble sans épissures intermédiaires est ainsi un multiple du nombre des sections composant la conduite si ces sections ont toutes la même longueur ou, en tout cas, est égale à la somme des longueurs de ces sections.

Plus précisément, dans une section quelconque, la pression d'air fournie par un premier compresseur débitant dans cette section qui s'exerce sur le furet, permet le déplacement du câble d'une extrémité à l'autre de celle-ci, jusqu'à ce que le furet franchisse la vanne de communication prévue à l'extrémité aval de cette section. Dans la suivante, la pression d'air créée par un second compresseur assure à son tour le déplacement du câble, tandis que la vanne située en amont de la première section est ouverte, mettant celle-ci à l'air libre, en assurant seulement un effet de portage du câble, limitant les frottements lors de la poursuite de son déplacement dans les sections suivantes de la conduite.

Or, la difficulté réside précisément dans la réalisation d'une vanne agencée de telle sorte qu'elle laisse se déplacer librement le câble qui la traverse, notamment sans créer de frottements s'opposant à son mouvement vers l'aval, tout en assurant une étanchéité relative suffisante dans la section où s'exerce la pression d'air comprimé, chaque zone de liaison entre deux sections successives étant équipée d'un compresseur ou analogue fournissant le flux d'air nécessaire et de moyens pour commander la vanne correspondante, à l'ouverture ou à la fermeture, avant et après le passage du furet.

La présente invention concerne une vanne du genre rappelé ci-dessus mais qui apporte des avantages particuliers, en permettant un fonctionnement automatique, qui se révèle notablement plus efficace qu'avec les solutions connues jusqu'à présent, cette vanne, réalisée sous la forme d'un ensemble compact et présentant une robustesse mécanique élevée, étant commandée en séquence sous la poussée du furet elle-même, en assurant successivement la présentation du furet au droit de la vanne, l'ouverture de celle-ci pour le passage du furet entraînant le câble, la fermeture de la vanne sur le câble au-delà du furet immédiatement après que celui-ci l'ait franchi, avec un jeu de passage minimal pour ce câble, et enfin l'ouverture de la vanne d'échappement située en amont, à l'extrémité opposée de la section considérée, pour assurer la mise à l'air libre de cette section, la pression d'air comprimé ne s'exerçant qu'au-delà de la vanne dans la section suivante.
A cet effet, la vanne considérée, comportant un boîtier fixe en deux parties comprenant chacune des moyens de fixation sur les extrémités respectives disposées en regard de deux sections adjacentes d'une conduite à raccorder coaxialement à travers le boîtier de la vanne, et un boisseau d'obturation mobile à l'intérieur de ce boîtier selon un plan perpendiculaire à l'axe commun des deux sections de la conduite, se caractérise en ce que le boisseau est constitué de deux opercules cylindriques parallèles, indépendants, formés chacun de deux demi-bagues, aptes à être maintenues en contact mutuel selon un plan diamétral passant par l'axe commun des deux sections de la conduite par l'intermédiaire de ressorts d'appui montés entre chacune de ces demi-bagues et le fond en regard d'une chambre ménagée dans le boîtier, dans laquelle est logé le boisseau, une des deux demi-bagues de chaque opercule comportant un conduit de communication entre un canal axial délimité entre les demi-bagues de cet opercule et la chambre, lorsque ces demi-bagues sont écartées l'une de l'autre à l'encontre des ressorts d'appui, laquelle chambre comporte également deux orifices, respectivement d'admisssion et d'évacuation d'air sous pression, un diaphragme en deux parties montées à coulissement l'une vers l'autre sous l'effet d'autres ressorts de rappel, étant logé dans une fente à faces parallèles ménagée à l'intérieur du boîtier entre les deux opercules.

De préférence, le furet monté en tête du câble comporte un corps disposé dans l'axe commun des deux sections de la conduite, présentant deux protubérances successives disposées à distance l'une de l'autre sur le corps du furet et comportant chacune un profil extérieur conique, ces protubérances étant raccordées par un élément cylindrique de liaison, de telle sorte que lors du déplacement du câble, chaque protubérance puisse provoquer successivement l'écartement des deux parties du diaphragme qui restent en permanence appliquées sur la surface externe du furet, en réalisant une étanchéité relative à la traversée de la vanne par celui-ci, puis du câble qu'il entraîne.

De préférence, les profils coniques des deux protubérances prévus vers l'avant du furet dans le sens de son déplacement dans la conduite, présentent la même inclinaison.

Avantageusement et selon une caractéristique particulière de la vanne considérée, l'opercule situé en aval par rapport à la direction de déplacement du câble, comporte également un profil conique de même inclinaison que celui des deux protubérances du furet, ce profil étant ménagé de telle sorte que les deux parties de cet opercule glissent successivement sur la première puis la seconde protubérances, qui écartent mutuellement et tour à tour ces deux parties.

La vanne selon l'invention peut être facilement mise en place sur la conduite enterrée, entre deux sections successives de cette dernière lors de la pose initiale de celle-ci et ne nécessite aucun aménagement particulier des zones intermédiaires entre ces sections au droit de ces vannes, lorsqu'elles ne correspondent pas aux chambres réalisées pour l'introduction ou la sortie du câble aux extrémités de la conduite, sauf à prévoir des moyens de liaison de chacun des boîtiers de ces vannes avec un compresseur d'air comprimé, délivrant la pression nécessaire au déplacement du furet et à la manoeuvre automatique de ces vannes.

D'autres caractéristiques d'une vanne pour conduite enterrée pour câble de télécommunications mis en place par soufflage dans une telle conduite, apparaîtront encore à travers la description qui suit d'un exemple de réalisation, donné à titre indicatif et non limitatif, en référence aux dessins annexés sur lesquels :
- La Figure 1 est une vue schématique en coupe longitudinale partielle d'une conduite enterrée munie d'une série de vannes, agencées conformément à une disposition déjà envisagée dans le brevet N° 90 11033 précité.
- La Figure 2 est une vue en coupe et en élévation, à plus grande échelle, de la vanne considérée, représentée dans sa position de fermeture préalablement au franchissement de cette vanne par un furet d'entraînement du câble à mettre en place dans la conduite.
- La Figure 3 est une vue en coupe transversale et en bout de la vanne de la Figure 2.
- Les Figures 4 à 10 sont des vues analogues à la Figure 2, permettant d'expliciter le processus de mise en oeuvre de la vanne lors de son franchissement par le furet d'entraînement du câble.

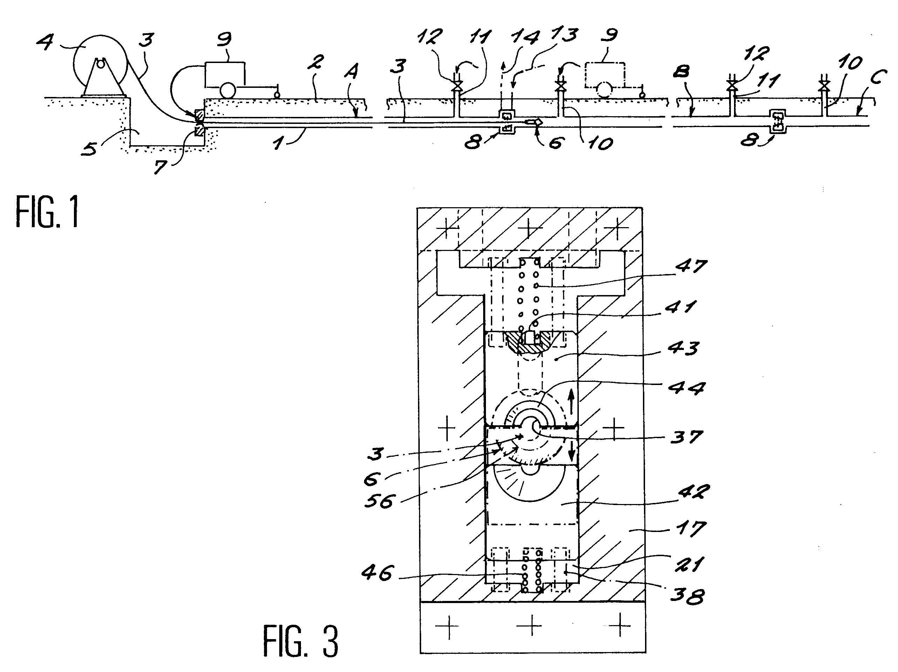

Sur la Figure 1, on a schématiquement désigné sous la référence 1 une conduite enterrée dans le sol 2, cette conduite étant destinée à entourer et protéger un câble de télécommunications 3, mis en place selon la longueur de celle-ci.

Ce câble 3 est de préférence déroulé à partir d'un touret ou tambour 4 d'un treuil, disposé sur la surface du sol 2 au voisinage d'une chambre d'accès 5 par laquelle un furet d'entraînement 6, fixé à l'extrémité du câble 3, est introduit dans la conduite 1, qui débouche dans cette chambre par l'intermédiaire d'un sas ou d'une vanne d'accès 7.

Cette dernière est subdivisée en un certain nombre de sections successives, désignées sur le schéma sous les références A, B, C ..., chaque section étant raccordée à la suivante par une vanne de communication 8, réalisée conformément à l'invention et dont la structure sera décrite plus en détail ci-après, chacune de ces vannes étant agencée de manière à permettre en séquence son franchissement par le furet 6 qui entraîne le câble 3, d'une extrémité à l'autre de la conduite 1, en assurant dans tous les cas une régénération adéquate de la pression d'air dans chacune de ces sections, apte à assurer le déplacement du furet dans celles-ci successivement.

L'entraînement du furet et du câble est réalisé au moyen d'une pression d'air comprimé, fournie par un certain nombre de compresseurs tels que 9, en nombre égal à celui des sections, chacun de ces compresseurs débouchant, soit à l'extrémité de la conduite 1 par laquelle est introduit le câble pour le premier de ces compresseurs qui alimente la section initiale A, les autres compresseurs débitant dans chacune des sections successives ultérieures B, C ..., en aval de la première dans le sens du déplacement du furet. A cet effet, chaque section comporte au voisinage de ses extrémités, entre les vannes de communication 8 avec les sections précédente et suivante, deux canalisations de liaison, respectivement 10 et 11, chacune de ces canalisations étant munie d'une vanne 12 permettant, selon le cas, de mettre en communication le compresseur d'air avec l'intérieur de la section correspondante ou, inversement, de mettre à l'air libre cette section. En outre, chacune des vannes 8 est réunie à deux conduites d'admission et d'échappement d'air, respectivement 13 et 14 pour commander son ouverture ou sa fermeture, en particulier pour permettre le passage du furet 6 et après celui-ci, de refermer la vanne sur le câble fixé derrière ce furet sans empêcher son libre déplacement au fur et à mesure de sa mise en place dans l'ensemble de la conduite à travers les sections successives. Le cas échéant, la commande de l'ouverture ou de la fermeture des organes mobiles de la vanne peut être effectuée par d'autres moyens, notamment électriques ou électro-pneumatiques.

Mais dans une solution de ce genre, chacune des vannes 8 doit être commandée individuellement lors du passage du furet 6, en même temps qu'il convient d'ouvrir et de fermer en séquence les vannes 12 prévues sur les canalisations 10 et 11, de manière à mettre en pression la section dans laquelle pénètre le furet, en même temps que la section précédente est mise à l'air libre, et ainsi de suite d'une extrémité à l'autre de la conduite.

On conçoit qu'une telle commande puisse présenter certaines difficultés pour être réalisée de manière optimale, afin en particulier d'assurer la fermeture et l'ouverture des vannes aux moments parfaitement adéquats, correspondant à la manoeuvre convenable de la vanne entre deux sections successives.

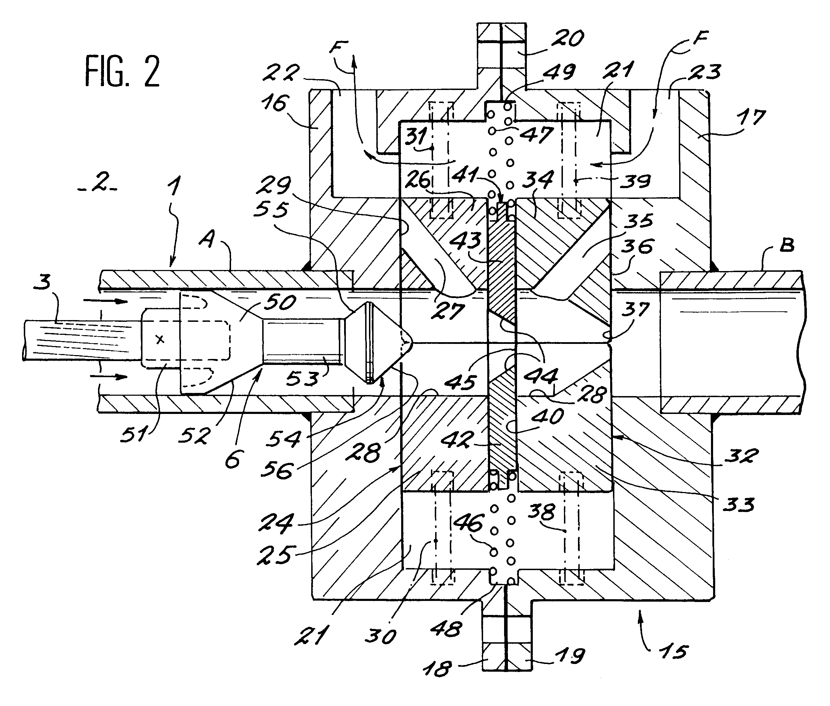

La vanne selon l'invention illustrée sur les Figures 2 à 10 permet, grâce aux perfectionnements qu'elle comporte, d'obtenir au moyen d'un mécanisme contenu dans un boîtier unique, à la fois la commande de l'ouverture ou de la fermeture de l'organe d'obturation de la vanne, mais également de réaliser simultanément la mise sous pression ou la mise à l'air libre des sections de la conduite reliées par cette vanne, dans les conditions les plus efficaces.

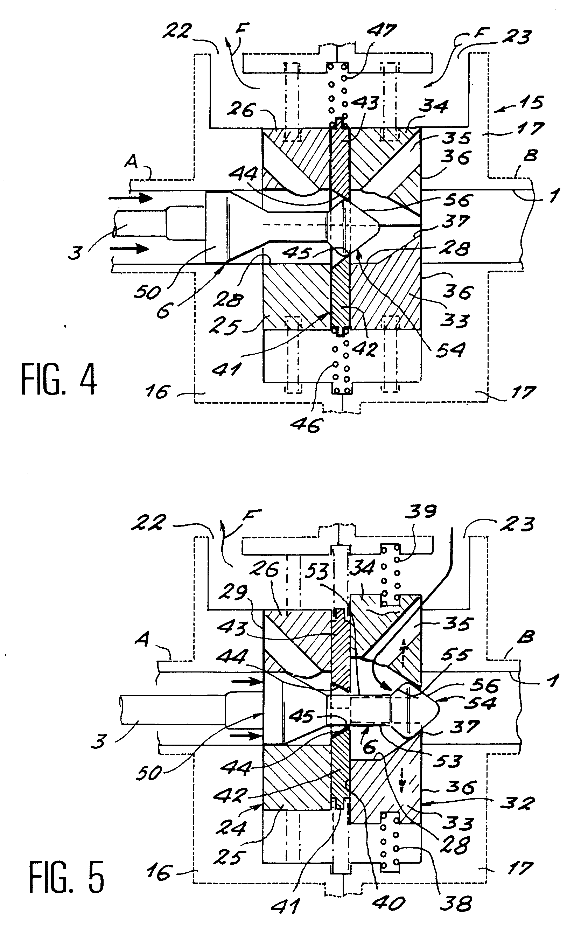

Comme on le voit sur les Figures 2 et 3 notamment, la vanne considérée comporte un boîtier 15 qui, dans l'exemple représenté, est disposé à la liaison de deux sections successives de la conduite 1, par exemple les sections A et B, les extrémités de la conduite dans ces sections se raccordant directement sur le boîtier 15, notamment par engagement et soudure sur celui-ci.

Le boîtier 15 est constitué d'un corps formé de deux flasques démontables, respectivement 16 et 17, présentant des épaulements 18 et 19 permettant de solidariser ces deux flasques l'un de l'autre selon un plan diamétral commun par des moyens de liaison du genre vis-écrou (non représentés) traversant des alésages 20 ménagés dans chacun des épaulements.

Le boîtier 15 ainsi réalisé délimite intérieurement une chambre 21 entourant l'axe de la conduite dans le prolongement des deux sections A et B, cette chambre étant raccordée par deux orifices, respectivement 22 et 23, à un compresseur d'air comprimé (ici non représenté), du genre de celui illustré sous la référence 9 sur la Figure 1 et permettant, à travers chacun de ces orifices séparément, soit d'alimenter la chambre 21 avec de l'air sous pression, soit inversement de la mettre à l'air libre.

A l'intérieur de la chambre 21, en regard des extrémités des sections A et B qui y débouchent, le boîtier 15 contient un boisseau constitué de deux opercules parallèles et indépendants. Le premier de ces opercules 24 est lui-même formé de deux demi-bagues, respectivement 25 et 26, cette dernière étant percée d'un conduit incliné 27 qui débouche d'une part dans la partie centrale de l'opercule entre les demi-bagues, à l'intérieur d'un canal 28 permettant, à travers le boîtier 15, de faire communiquer les sections A et B en position d'ouverture de la vanne, et qui d'autre part et à son extrémité opposée, se trouve en regard de la paroi interne 29 du premier flasque 16 du boîtier, lorsque les deux demi-bagues 25 et 26 sont appliquées l'une contre l'autre selon le plan diamétral médian de la conduite, comme illustré sur la Figure 2.

Des ressorts 30 et 31 sont montés entre les fonds du boîtier 15 et les faces extérieures des demi-bagues 25 et 26 de manière à exercer sur celles-ci un effort de rappel permanent, tendant à les maintenir appliquées l'une contre l'autre dans la position précédente où le conduit 27 ne communique pas avec l'intérieur de la chambre 21, ces deux demi-bagues délimitant axialement un canal 28 de communication entre les sections A et B à travers la vanne 8.

Le boîtier 15 contient, disposé parallèlement au premier opercule 24, un second opercule 32 de structure analogue, comportant à son tour deux demi-bagues 33 et 34 qui, de même lorsqu'elles sont appliquées l'une contre l'autre, prolongent le canal 28 de communication entre les deux sections. La demi-bague 34 comporte aussi un conduit incliné 35, orienté de façon opposée au conduit 27 du premier opercule, en communication comme le précédent avec le canal 28, et en étant disposé en regard de la paroi interne 36 du flasque 17.

Toutefois, contrairement au premier opercule 24, le second opercule 32 comporte, à son extrémité dirigée vers la seconde section B située en aval de la première section A par rapport au sens de déplacement du câble 3 et du furet 6, une portion qui se rétrécit progressivement, en laissant libre, lorsque les deux demi-bagues 33 et 34 sont appliquées l'une contre l'autre dans le plan diamétral médian de la conduite, un passage 37 dont le diamètre correspond sensiblement à celui du câble 3, ce dernier pouvant donc à cet endroit librement traverser l'opercule, comme on le verra plus loin.

D'autres ressorts 38 et 39 sont à nouveau prévus entre le fond du boîtier 15 et les faces externes des demi-bagues 33 et 34 pour exercer sur celles-ci un effort de rappel, tendant à les appliquer en permanence l'une contre l'autre.

La largeur de la chambre 21 à l'intérieur du boîtier 15 est déterminée de telle sorte que les deux opercules 24 et 32 délimitent entre eux une fente transversale 40, s'étendant perpendiculairement à l'axe de la conduite et dans laquelle est monté un diaphragme 41 formé de deux parties, respectivement 42 et 43, celles-ci présentant chacune une face inclinée 44 dirigée vers l'amont, c'est-à-dire en direction de la section A de la conduite 1, en délimitant en outre entre elles un passage 45, propre à permettre, comme le passage 37, la libre traversée du diaphragme 41 par le câble 3 dans sa partie courante.

Des ressorts de rappel, respectivement 46 et 47, sont également montés entre les deux parties 42 et 43 du diaphragme 41 et le fond du boîtier 15, ces ressorts étant de préférence immobilisés contre ce dernier dans un chambrage 49 prévu entre les épaulements 18 et 19 des flasques 16 et 17.

Les Figures 2 et 3 illustrent enfin la structure particulière du furet 6 d'entraînement du câble 3, ce furet comportant une première protubérance 50 dont le diamètre externe correspond sensiblement, au jeu de fonctionnement près permettant le déplacement du furet sans frottements excessifs, au diamètre interne de la conduite 1 dans chacune de ses sections successives, cette protubérance étant munie d'un organe de liaison 51 permettant l'ancrage du furet sur l'extrémité du câble 3.

Cette première protubérance 50 se prolonge vers l'aval et se raccorde, par une zone à profil conique 52, avec une partie cylindrique 53, dont le diamètre est de l'ordre de grandeur mais légèrement supérieur à celui du câble 3, et se termine par une seconde protubérance 54, présentant elle deux surfaces coniques opposées, respectivement 55 et 56, le diamètre maximal de cette seconde protubérance étant très notablement inférieur à celui de la première, donc à celui de la conduite. De préférence, l'inclinaison des profils coniques 52 et 56 des protubérances 50 et 54 est indentique.

Le fonctionnement de la vanne représentée sur les Figures 2 et 3, peut être plus aisément expliquée en considération des Figures 4 à 10 où cette vanne est illustrée de façon légèrement plus schématique, pour montrer les phases successives de sa mise en oeuvre.

Dans un premier temps, le furet 6, comprenant ses deux protubérances 50 et 54 et sa partie cylindrique de liaison 53 entre ces dernières, est fixé à l'extrémité du câble 3 à introduire et à entraîner dans la conduite 1 sur toute la longueur de cette dernière. Dans la section A, après que le furet ait été mis en place, le premier compresseur fournit, à travers le sas d'extrémité 7, une pression d'air suffisante pour exercer sur le furet une force apte à provoquer le déplacement de ce dernier, en même temps que le déplacement du câble 3 qui se déroule à partir du touret 4 (Figure 1), le mouvement se poursuivant jusqu'à ce que le furet atteigne la première vanne 8 et en particulier le boîtier 15 de cette dernière dans la position représentée sur la Figure 2.

Dans toute cette première phase du déplacement du furet, le boîtier 15 est alimenté en air comprimé par l'orifice 23 situé en aval dans le flasque 17, le débit d'air fourni traversant librement la chambre 21 pour s'échapper par l'orifice 22 prévu à l'extrémité opposée dans le flasque 16, selon le sens de la flèche F sur cette Figure.

Dans la phase suivante, représentée sur la Figure 4, le furet 6 pénétre dans le boîtier de la vanne et traverse librement la première partie du canal 28 entre les deux demi-bagues 25 et 26 du premier opercule 24, jusqu'au moment où sa protubérance 54 située la plus en avant vient rencontrer le diaphragme 41, en s'engageant entre les faces inclinées 44 de celui-ci et en venant obturer le passage 45. Dans cette position, l'air comprimé, qui crée sur la face antérieure de la première protubérance 50 l'effort de déplacement du furet, ne pénètre pratiquement pas dans le canal 28, du fait du jeu limité laissé libre entre la paroi interne de la conduite 1 et le furet 6.

Le mouvement se poursuivant dans les mêmes conditions, la première protubérance 54, par sa face conique 56, vient progressivement écarter, à l'encontre des ressorts 46 et 47, les deux parties 42 et 43 du diaphragme 41, celles-ci se rapprochant ensuite en suivant le profil opposé de son autre face conique 55, une fois que la protubérance a franchi le passage 45.

Dans l'étape suivante, illustrée sur la Figure 5, la première protubérance 54 vient à son tour en contact, par sa face avant 56, s'engager dans le passage progressivement rétréci 37, entre les deux demi-bagues 33 et 34 du second opercule 32, en écartant ces dernières avec compression correspondante des ressorts 38 et 39. Simultanément, les deux parties 42 et 43 du diaphragme 41 se sont rapprochées l'une de l'autre et glissent alors, au cours du mouvement, la surface externe de la partie cylindrique de liaison 53 du furet, en isolant les deux parties du canal 28 de part et d'autre du diaphragme.

Lorsque la protubérance 54 s'engage dans le passage rétréci 37, elle écarte l'une de l'autre les deux parties 33 et 34 du second opercule 32, à l'encontre des ressorts 38 et 39. Dans ces conditions, le conduit incliné 35, ménagé dans la demi-bague 34, est déplacé latéralement de telle sorte qu'il échappe progressivement à la paroi 36 du flasque 17, en mettant en communication ce conduit avec la chambre 21 et l'orifice 23. Dans ces conditions, le débit de l'air comprimé introduit dans cette chambre 21 est canalisé principalement dans le conduit 35 et vient dans le canal 28 exercer sur la protubérance 54 un effort de poussée aidant la partie avant du furet 6 à franchir le second opercule 32 et à s'engager dans la section B de la conduite 1 en aval de la vanne considérée.

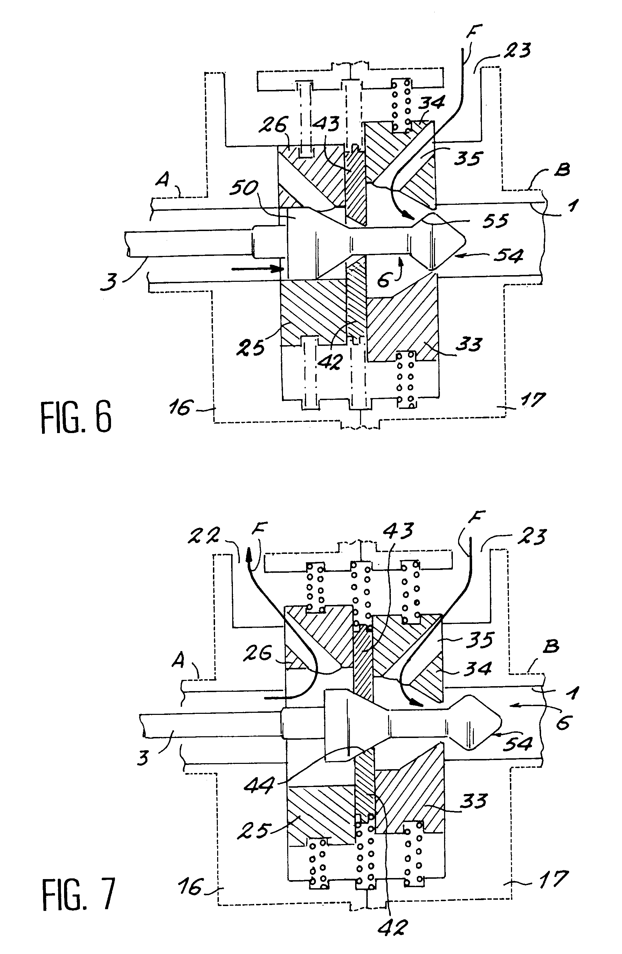

Le furet 6 poursuivant son mouvement sous l'effort de poussée exercé par l'air comprimé, à la fois dans la première section A derrière la protubérance 50 et également sur la protubérance 54 dans le canal 28, les deux demi-bagues 33 et 34 du second opercule 32 sont repoussées au maximum (Figure 6), juste avant que la protubérance 50, par sa face conique 52, ne s'engage dans le passage 45 délimité entre les faces inclinées 44 des deux parties 42 et 43 du diaphragme 41 (Figure 7).

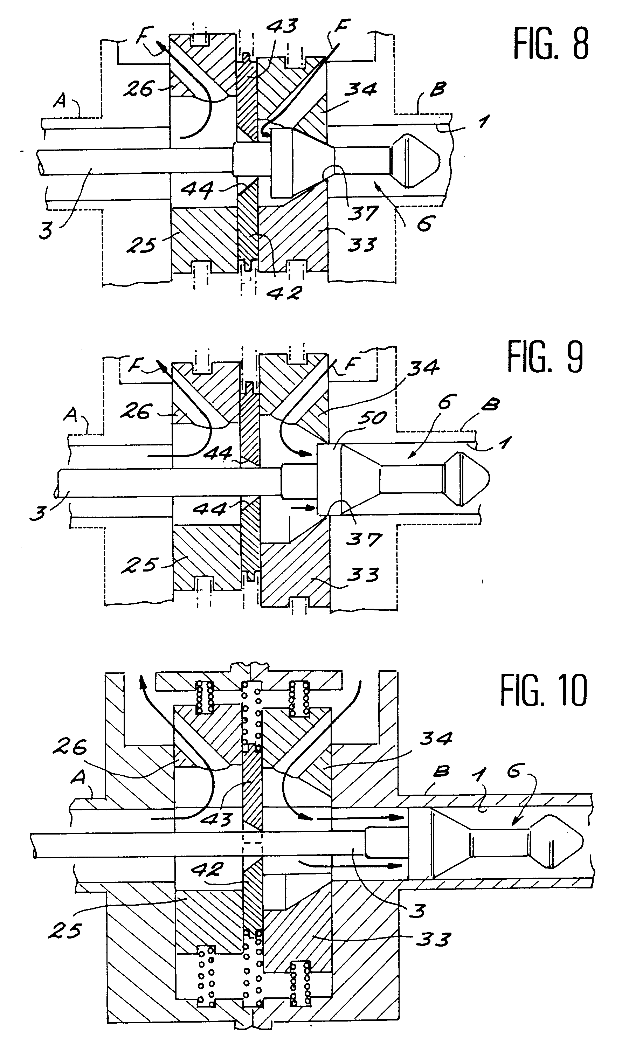

Dans cette position, en raison du fait que le diamètre de la partie cylindrique de liaison 53 prévue sur le furet 6 entre les deux protubérances 50 et 54, comporte un diamètre supérieur à celui du câble 3, la demi-bague 34 reste légèrement repoussée vers le haut, autorisant une fraction du débit provenant de l'orifice 23 à traverser le conduit 35. En revanche, la protubérance 50 vient totalement fermer le passage 45 entre les deux parties 42 et 43 du diaphragme, à telle enseigne que la pression de l'air comprimé dans la première section A de la conduite, provoque dans le canal 28, un effort suffisant sur les demi-bagues 25 et 26 du premier opercule pour que le canal 27, du fait du déplacement vers le haut de la demi-bague 26 qui en résulte, découvre partiellement ce conduit, en mettant alors à l'air libre la section A par l'orifice 22 dans la chambre 21. Dans ces conditions, la totalité de la poussée de l'air s'exerce sur la protubérance 54 à l'avant du furet 6, permettant à celui-ci de franchir la vanne 8, d'abord en imposant à l'autre protubérance 50 d'écarter les deux parties 42 et 43 du diaphragme 41, puis de s'engager dans le canal 28 en aval de ce diaphragme (Figure 8), avant que cette même protubérance 50 ne vienne à son tour s'engager dans le passage 45 (Figure 9), en repoussant alors au maximum les deux demi-bagues 33 et 34 du second opercule 32.

Dans la position finale, représentée sur la Figure 10, la protubérance 50 du furet 6 est totalement engagée dans la section B de la conduite 1, l'air comprimé admis par l'orifice 23 et le conduit 35 venant exercer derrière ce furet l'effort de poussée maximal dans la partie du canal 28 délimitée par les deux demi-bagues 33 et 34 de l'opercule 32 et le diaphragme 41, dont les deux parties 42 et 43 s'appuient alors contre le câble en réalisant une étanchéité suffisante, de part et d'autre de ce diaphragme.

Simultanément, l'air comprimé dans la section A s'échappe librement par le conduit 25 et l'orifice 22 jusqu'au moment où les deux demi-bagues 25 et 26 du premier opercule 24 peuvent revenir en position initiale. En revanche, l'air admis par l'orifice 23 et le canal 35 derrière le furet 6 dans la section B maintient la pression nécessaire à l'avance du furet dans cette dernière, les demi-bagues 33 et 34 restant écartées et de préférence verrouillées vis-à-vis du boîtier 15, le cas échéant en utilisant un système mécanique (non représenté), prévu en partie haute de ce dernier.

On réalise ainsi une vanne de structure particulièrement compacte, dans laquelle la commande de ses deux opercules et du diaphragme intermédiaire est directement obtenue par le passage du furet lui-même à travers ces derniers, les deux demi-bagues et les deux parties des opercules et du diaphragme respectivement étant déplacées par les profils extérieurs des protubérances du furet et la pression de l'air comprimé dans le canal de communication.

Les diverses phases nécessaires au déroulement du processus, à savoir l'admission du furet et du câble en amont de la conduite, le déplacement du furet jusqu'à la première vanne, le passage de celle-ci à travers son diaphragme, puis la fermeture de ce dernier sur le câble derrière le furet avec un jeu de passage n'empêchant pas le mouvement de ce câble, l'ouverture du premier opercule permettant l'échappement du flux d'air de la section située en amont, et l'injection de l'air comprimé dans le second opercule pour créer une pression derrière le furet, tirant le câble à travers la section suivante en aval, sont réalisées de façon automatique et en séquence grâce à la structure des différentes parties de la vanne et à leurs facultés de mouvements relatifs.

L'ensemble présente une grande sûreté de fonctionnement et n'exige aucune manoeuvre particulière de chacune des parties de la vanne, ces dernières étant commandées de façon successive, par le déplacement du furet lui-même, ce qui permet à tout instant de maintenir dans la conduite la pression d'air nécessaire, mais seulement et en séquence dans chacune des sections de cette conduite dans laquelle le furet est en mouvement.

Bien entendu, il va de soi que l'invention ne se limite pas à l'exemple de réalisation plus spécialement décrit en relation aux dessins annexés ; elle en embrasse au contraire toutes les variantes.

## Revendications

**1 -** Vanne pour la régénération du débit d'air d'entraînement d'un câble de télécommunications (3) dans une conduite enterrée (1), au moyen d'un furet (6) fixé à l'extrémité du câble, comportant un boîtier fixe (15) en deux parties, comprenant chacune des moyens de fixation sur les extrémités respectives disposées en regard de deux sections (A, B) adjacentes d'une conduite (1) à raccorder coaxialement à travers le boîtier de la vanne, et un boisseau d'obturation mobile à l'intérieur de ce boîtier selon un plan perpendiculaire à l'axe commun des deux sections de la conduite, caractérisée en ce que le boisseau est constitué de deux opercules cylindriques (24, 32) parallèles, indépendants, formés chacun de deux demi-bagues (25, 26 - 33, 34) aptes à être maintenues en contact mutuel selon un plan diamétral passant par l'axe commun des deux sections de la conduite par l'intermédiaire de ressorts d'appui (30, 31 - 38, 39) montés entre chacune de ces demi-bagues et le fond en regard d'une chambre (21) ménagée dans le boîtier, dans laquelle est logé le boisseau, une des deux demi-bagues de chaque opercule comportant un conduit de communication (27, 35) entre un canal axial délimité entre les demi-bagues de cet opercule et la chambre lorsque ces demi-bagues sont écartées l'une de l'autre à l'encontre des ressorts d'appui, laquelle chambre comporte également deux orifices (22, 23), respectivement d'admission et d'évacuation d'air sous pression, un diaphragme (41) en deux parties (42, 43) montées à coulissement l'une vers l'autre sous l'effet d'autres ressorts de rappel (46, 47), étant logé dans une fente (40) à faces parallèles ménagée à l'intérieur du boîtier (15) entre les deux opercules (24, 32).

**2 -** Vanne selon la revendication 1, caractérisée en ce que le furet (6) monté en tête du câble (3) comporte un corps disposé dans l'axe commun des deux sections (A, B) de la conduite (1), présentant deux protubérances (50, 54) successives disposées à distance l'une de l'autre sur le corps du furet et comportant chacune un profil extérieur (52, 56) conique, ces protubérances étant raccordées par un élément cylindrique (53) de liaison, de telle sorte que lors du déplacement du câble (3), chaque protubérance puisse provoquer successivement l'écartement des deux parties (42, 43) du diaphragme (41) qui restent en permanence appliquées sur la surface externe du furet, en réalisant une étanchéité relative à la traversée de la vanne par celui-ci, puis du câble qu'il entraîne.

**3 -** Vanne selon l'une des revendications 1 ou 2, caractérisée en ce que les profils (52, 56) des deux protubérances (50, 54), prévus vers l'avant du furet (6) dans le sens de son déplacement dans la conduite (1), présentent la même inclinaison.

**4 -** Vanne selon l'une quelconque des revendications 1 à 3, caractérisée en ce que l'opercule (32) situé en aval par rapport à la direction de déplacement du câble (3), comporte également un profil conique (37) de même inclinaison que celui des deux protubérances (50, 54) du furet, ce profil étant ménagé de telle sorte que les deux parties de cet opercule glissent successivement sur la première (54) puis la seconde (50) protubérances du furet, qui écartent mutuellement et tour à tour ces deux parties.
